# EUROPÄISCHE PATENTANMELDUNG

(11) **EP 0 920 898 A2**
(43) Veröffentlichungstag der Anmeldung: **09.06.1999**
(21) Anmeldenummer: 98121372.1
(22) Anmeldetag: 10.11.1998
(51) Int. Cl.: B01D 46/06, B01D 46/24

(54) **Verstärkungselement**

(30) Priorität: 10.11.1997 DE 19749598
(71) Anmelder: HEINRICH KUPER GMBH & CO KG, D-33397 Rietberg (DE)
(72) Erfinder: Tölke, Edgar, 33335 Gütersloh (DE)
(74) Vertreter: Weber, Joachim, Dr.

(57) **Zusammenfassung**

Die vorliegende Erfindung betrifft ein Verstärkungselement für ein flexibles, folien- oder plattenartiges Werkstück (4), mit einem länglichen, stabförmigen Kern (2), welcher mit einem Klebermaterial (3) zur Befestigung an dem Werkstück (4) ummantelt ist.

## Beschreibung

Die Erfindung bezieht sich auf ein Verstärkungselement für ein flexibles, folienartiges oder plattenartiges Werkstück. Weiterhin betrifft die Erfindung die Verwendung eines Verstärkungselements bei der Herstellung von Filtern aus flexiblen, folien- oder plattenartigen Materialien, beispielsweise aus Papier, Vliesstoffen, filzartigen Materialien oder ähnlichem.

Flexible, folien- oder plattenartige Werkstücke haben die Eigenschaft, daß sie eine sehr geringe Formstabilität aufweisen. Aus diesem Grunde werden derartige Werkstücke entweder in starren Rahmen gehaltert oder gelagert oder mit Faltungen, Sicken oder ähnlichem versteift. Diese Konstruktionen sind zum einen in der Herstellung kostenintensiv, zum anderen ergeben sich eine Vielzahl von Anwendungsfällen, in denen eine derartige Versteifung oder Verstärkung nicht einsetzbar ist.

Der Erfindung liegt die Aufgabe zugrunde, ein Verstärkungselement für ein flexibles, folien- oder plattenartiges Werkstück zu schaffen, welches einfach und kostengünstig herstellbar ist und universell angewendet werden kann.

Die Aufgabe wird erfindungsgemäß durch die Merkmale des Hauptanspruchs gelöst, die Unteransprüche zeigen weitere vorteilhafte Ausgestaltungen der Erfindung.

Das erfindungsgemäße Verstärkungselement umfaßt somit einen länglichen, stabförmigen Kern, welcher mit einem Klebermaterial zur Befestigung an dem Werkstück ummantelt ist. Der Kern des erfindungsgemäßen Verstärkungselementes dient somit zur Kraftübertragung und somit zur eigentlichen Verstärkung, während das Klebermaterial die Befestigung des Kerns an dem Werkstück sicherstellt. Durch die Ummantelung mit Klebermaterial kann das Verstärkungselement auch an sehr porösen, faserigen, rauhen oder ähnlichen Oberflächen sicher verankert werden.

Erfindungsgemäß kann der Kern in bevorzugter Weise unterschiedlich ausgebildet sein. Zum einen ist es möglich, verschiedenste Querschnitte, beispielsweise rund, rechteckig, quadratisch etc. zu realisieren. Zum anderen kann der Kern entweder im wesentlichen starr oder flexibel sein. Der Kern kann somit über seinen gesamten Querschnitt homogen ausgebildet werden, es ist jedoch auch möglich, diesen fadenartig oder kordelartig zu fertigen. Zur Sicherstellung der erfindungsgemäß vorgesehenen Verstärkungsfunktion kann der Kern bevorzugterweise so ausgebildet sein, daß er Zugkräfte und/oder Druckkräfte überträgt. In Verbindung mit dem flexiblen, folien- oder plattenartigen Werkstück kann sich somit eine verstrebte, fachwerkartige Gesamtkonstruktion ergeben.

Besonders günstig ist es, wenn das Klebermaterial aus einem thermoplastischen Material besteht, d.h. als Schmelzkleber ausgestaltet ist. Hierdurch kann das Klebermaterial innerhalb kürzester Zeit abgebunden werden, entweder im kristallisierten oder amorphen Zustand. Hierdurch ergibt sich eine ganz erhebliche Verkürzung der Verarbeitungsdauer. Die Erwärmung des Klebermaterials kann durch Luftheizung, Strahlungsheizung oder Kontaktheizung erfolgen.

Durch Wahl eines geeigneten Schmelzpunktes und/oder durch Anpassung des Materials des Klebers ist eine optimale Auswahl des Verstärkungselements im Hinblick auf das zu verarbeitende Werkstück möglich.

Der Schmelzpunkt des Klebermaterials kann weiterhin in einfachster Weise auf die jeweiligen Anforderungen und das Material des Kerns angepaßt werden. So ist es möglich, den Schmelzpunkt des Klebermaterials niedriger auszuwählen, als den Schmelzpunkt des Kerns. Andererseits kann der Schmelzpunkt des Klebers so eingestellt werden, daß der Kern während des Klebevorganges weicher oder elastischer wird und sich somit der Form des Werkstücks besser anpassen kann.

In einer weiteren, günstigen Ausgestaltung der Erfindung ist vorgesehen, daß die Menge des Klebermaterials entweder so ausgewählt ist, daß das Verstärkungselement an dem Werkstück befestigt werden kann, oder daß zusätzliches Klebermaterial zur Verfügung steht, welches von dem Verstärkungselement abfließen oder abtropfen kann und zu einer weiteren Verfestigung oder Verstärkung des Werkstücks führt.

Besonders günstig ist es, wenn das Material des Kerns kein Schrumpfverhalten zeigt und in seiner Länge konstant und stabil bleibt. Hierdurch wird verhindert, daß während des Aufklebens oder beim nachfolgenden Gebrauch des Werkstücks Verformungen des Kerns und somit des Verstärkungselements auftreten.

Das erfindungsgemäße Verstärkungselement ist flächig an einer Oberläche des Werkstücks anbringbar, um dieses plattenartig, flach oder dreidimensional zu verstärken. Alternativ hierzu ist das erfindungsgemäße Verstärkungselement auch einsetzbar, um lediglich an erhabenen oder hervorstehenden Bereichen des Werkstücks befestigt zu werden. Diese erhabenen Bereiche können durch Faltung, Fächerung oder ähnliches ausgebildet sein. Hierdurch ist es möglich, die erhabenen Bereiche mittels des Verstärkungselements zu verbinden und gleichzeitig auf Abstand zu halten. Das Werkstück wird somit in seiner dreidimensionalen Form stabilisiert.

Weiterhin besteht erfindungsgemäß die Möglichkeit, das Verstärkungselement entweder einseitig oder beidseitig an dem Werkstück anzubringen. Insbesondere bei dreidimensionalen Formen des Werkstückes kann somit eine besonders gute Stabilisierung erfolgen.

Im Rahmen der Erfindung sind unterschiedlichste Werkstoffe für das Werkstück einsetzbar, an welchen das Verstärkungselement befestigt werden kann. Die Werkstücke können aus Papier, aus Faservlies, aus filzartigen Materialien, in Form von Fasermatten oder Preßkörpern oder aus porösen Kunststoffen hergestellt werden.

Durch die geeignete Auswahl des Klebermaterials ist es insbesondere bei den oben beschriebenen Materialien der Werkstücke möglich, diese in gewünschtem Maße flexibel oder verformbar zu halten, so daß beispielsweise beim Einbau oder bei der nachfolgenden Verwendung vorgegebene Verformungen des Werkstückes innerhalb bestimmter Grenzen möglich bleiben.

Die Auswahl des Klebermaterials sowie des Materials für den Kern gestattet es weiterhin, das Verstärkungselement an die unterschiedlichsten Anwendungszwecke anzupassen, beispielsweise säurebeständige Verstärkungselemente herzustellen, Verstärkungselemente, die für die Nahrungsmittelindustrie geeignet sind, zu fertigen oder geeignete Materialien hinsichtlich der Toxizität, der Recyclingeigenschaften, der entsprechenden Feuerschutzklasse oder Brennbarkeit oder sonstiger Anforderungen auszuwählen.

Im Rahmen der Erfindung ist es besonders günstig, wenn das Verstärkungselement bei Filtern, Filtermaterialien oder ähnlichem verwendet wird. Derartige Filter bestehen üblicherweise aus flachen, schichtförmigen, blattartigen, flächigen Materialien, die entsprechend porös sind und somit nur einge geringe Eigen-Festigkeit aufweisen. Mittels der erfindungsgemäßen Verstärkungselemente können diese Filter-Materialien verstärkt werden, so daß sie sowohl in flacher, folienartiger Form, als auch in dreidimensionaler Form, beispielsweise als gefaltete oder gewellte Filter einsetzbar sind. Da die erfindungsgemäßen Verstärkungselemente hinsichtlich der Materialauswahl des Kerns und des Klebers in weitem Rahmen variabel sind, können Filter für unterschiedlichste Zwecke, beispielsweise als Luftfilter, als Gasfilter, als Filter für Fluide oder Flüssigkeiten ausgestaltet werden.

In einer besonders günstigen Ausgestaltung der Erfindung ist vorgesehen, daß der Filter im wesentlichen zylindrisch ist, wobei seine Wandung durch eine Sternfaltung eines flachen Materials gebildet wird. Das erfindungsgemäße Verstärkungselement kann an der Außenseite oder an der Innenseite des gefalteten Filtermaterials angebracht werden. Die Form und Anordnung des Verstärkungselements ist in weitem Bereich variabel, das Verstärkungselement kann entweder ringförmig, senkrecht zur Faltung oder wendelförmig aufgebracht werden.

Insbesondere für die Filterherstellung kann es günstig sein, wenn der Schmelzpunkt des Kerns bei ca. 230°C bis 500°C liegt, während der Schmelzpunkt des Klebers zwischen 50°C und 250°C liegt.

Bei der beschriebenen Filterpatrone mit Sternfaltung wird das Verstärkungselement bevorzugterweise auf den Falt-Kanten angeklebt. Auf diese Weise wird der Abstand der Falt-Kanten konstant beibehalten, wodurch sich insgesamt eine konstante Form der Filterpatrone ergibt, ohne daß deren Filterwirkung oder Durchlässigkeit beeinträchtig oder deren Außenabmessungen vergrößert werden.

Im folgenden wird die Erfindung anhand von Ausführungsbeispielen in Verbindung mit der Zeichnung beschrieben. Dabei zeigt:
- Fig. 1: eine vereinfachte, schematische, perspektivische Darstellung des erfindungsgemäßen Verstärkungselements,
- Fig. 2: eine vereinfachte Seiten-Ansicht eines Anwendungsfalles für das erfindungsgemäße Verstärkungselement,
- Fig. 3: eine Schnitt-Ansicht einer erfindungsgemäßen Filterpatrone unter Verwendung des Verstärkungselements, und
- Fig. 4: eine Seitenansicht der in Fig. 3 im Schnitt gezeigten Filterpatrone.

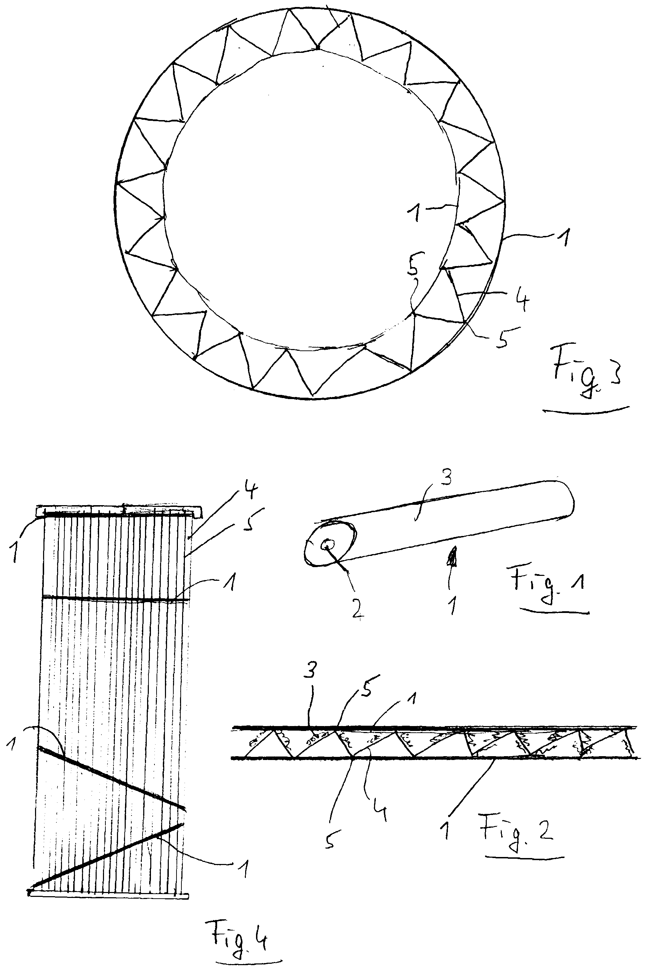

Die Fig. 1 zeigt ein Ausführungsbeispiel des erfindungsgemäßen Verstärkungselements 1. Dieses umfaßt einen runden Kern 2 (Seele). Der Kern 2 kann einstückig ausgebildet sein, es ist jedoch auch möglich, diesen fadenartig aus mehreren Strängen zu fertigen. Der Kern 2 ist durch ein thermoplastisch verformbares Klebermaterial 3 ummantelt. Die Dicke des Klebermaterials kann den Anwendungs-Anforderungen angepaßt werden.

Die Fig. 2 zeigt in vereinfachter Seiten-Ansicht ein Anwendungs-Beispiel für das erfindungsgemäße Verstärkungselement. Die Fig. 2 zeigt ein flächiges Werkstück 4, welches zickzack-förmig geformt ist. Auf erhabenen Bereichen 5 ist ein Verstärkungselement 1 angeklebt. Die Fig. 2 zeigt, daß sowohl an der Oberseite als auch an der Unterseite ein derartiges Verstärkungselement 1 vorgesehen ist. Weiterhin ist schematisch dargestellt, daß zusätzlich Klebermaterial 3 von dem Verstärkungselement 1 ablaufen oder abtropfen kann, welches das Material des Werkstücks 4 zusätzlich verstärkt.

Die Fig. 3 und 4 zeigen eine zylindrische Filterpatrone mit Sternfaltung des Materials. Die Filterpatrone ist in üblicher Weise, wie aus dem Stand der Technik bekannt, ausgebildet. Zur Verstärkung ist sowohl an der Außenseite als auch an der Innenseite ein Verstärkungselement 1 angeklebt, wobei die Klebung an den erhabenen Bereichen 5 der Faltung erfolgt (siehe Fig. 3).

Die Fig. 4 zeigt eine Filterpatrone, bei welcher unterschiedliche Anordnungen von Verstärkungselementen gewählt sind. Die Verstärkungselemente können entweder ringförmig aufgebracht sein, es ist jedoch auch möglich, diese wendelartig, schräg oder in sonstiger Weise aufzukleben.

Bevorzugte Merkmale der Erfindung (Klauseln):
1. Verstärkungselement für ein flexibles, folien- oder plattenartiges Werkstück (4), mit einem länglichen, stabförmigen Kern (2), welcher mit einem Klebermaterial (3) zur Befestigung an dem Werkstück (4) ummantelt ist.
2. Verstärkungselement nach Klausel 1, dadurch gekennzeichnet, daß das Klebermaterial (3) aus einem thermoplastischen Material besteht.
3. Verstärkungselement nach Klausel 1 oder 2, dadurch gekennzeichnet, daß das Klebermaterial (3) zur Befestigung des Kerns (2) an dem Werkstück (4) ausgebildet und dimensioniert ist.
4. Verstärkungselement nach einer der Klauseln 1 bis 3, dadurch gekennzeichnet, daß an dem Kern (2) zusätzliches Klebermaterial (3) angeordnet ist.
5. Verstärkungselement nach einer der Klaueln 1 bis 4, dadurch gekennzeichnet, daß der Kern (2) im wesentlichen starr ausgebildet ist.
6. Verstärkungselement nach einer der Klauseln 1 bis 4, dadurch gekennzeichnet, daß der Kern (2) flexibel ausgebildet ist.
7. Verstärkungselement nach Klausel 6, dadurch gekennzeichnet, daß der Kern (2) fadenartig ausgebildet ist.
8. Verstärkungselement nach einer der Klauseln 1 bis 7, dadurch gekennzeichnet, daß der Kern (2) zur Übertragung von Zugkräften ausgebildet ist.
9. Verstärkungselement nach einer der Klauseln 1 bis 8, dadurch gekennzeichnet, daß der Kern (2) zur Übertragung von Druckkräften ausgebildet ist.
10. Verstärkungselement nach einer der Klauseln 1 bis 9, dadurch gekennzeichnet, daß der Kern (2) aus einem längenstabilen Material gefertigt ist.
11. Verstärkungselement nach einer der Klauseln 1 bis 10, dadurch gekennzeichnet, daß das Verstärkungselement (1) flächig an einer Oberfläche des Werkstücks (4) anbringbar ist.
12. Verstärkungselement nach einer der Klauseln 1 bis 10, dadurch gekennzeichnet, daß das Verstärkungselement (1) an erhabenen Bereichen (5) des Werkstücks (4) anbringbar ist.
13. Verstärkungselement nach Klausel 12, dadurch gekennzeichnet, daß die erhabenen Bereiche (5) durch Faltung oder Fächerung ausgebildet sind.
14. Verstärkungselement nach einer der Klauseln 12 bis 13, dadurch gekennzeichnet, daß die erhabenen Bereiche (5) mittels des Verstärkungselements (1) verbunden und auf Abstand gehalten sind.
15. Verstärkungselement nach einer der Klauseln 12 bis 14, dadurch gekennzeichnet, daß beidseitig auf ein zick-zack-artig gefaltetes Werkstück (4), die jeweiligen erhabenen Bereiche (5) verbindend, ein Verstärkungselement (1) aufgeklebt ist.
16. Verstärkungselement nach einer der Klauseln 1 bis 15, dadurch gekennzeichnet, daß das Werkstück (4) aus Papier gefertigt ist.
17. Verstärkungselement nach einer der Klauseln 1 bis 15, dadurch gekennzeichnet, daß das Werkstück (4) aus einem Faservlies gefertigt ist.
18. Verstärkungselement nach einer der Klauseln 1 bis 15, dadurch gekennzeichnet, daß das Werkstück (4) aus einem filzartigen Material gefertigt ist.
19. Verwendung eines Verstärkungselements nach einer der Klauseln 1 bis 18 für einen Filter aus einem Material, welches Papier, ein filzartiges Material, einen porösen Kunststoff und/oder ein Faservlies umfaßt.
20. Verwendung nach Klausel 19, dadurch gekennzeichnet, daß der Filter im wesentlichen zylindrisch ausgebildet ist und mit einer Sternfaltung versehen ist.
21. Verwendung nach Klausel 20, dadurch gekennzeichnet, daß zumindest ein Verstärkungselement (1) an der Außenseite des Filters angebracht ist.
22. Verwendung nach einer der Klauseln 20 bis 21, dadurch gekennzeichnet, daß zumindest ein Verstärkungselement (1) an der Innenseite des Filters angebracht ist.
23. Verwendung nach einer der Klauseln 20 bis 22, dadurch gekennzeichnet, daß das Verstärkungselement (1) ringförmig, senkrecht zur Faltung, angeordnet ist.
24. Verwendung nach einer der Klauseln 20 bis 22, dadurch gekennzeichnet, daß das Verstärkungselement (1) wendelförmig angeordnet ist.

Die Erfindung ist nicht auf die gezeigten Ausführungsbeispiele beschränkt, vielmehr ergeben sich im Rahmen der Erfindung vielfältige Abwandlungs- und Modifikationsmöglichkeiten.

Zusammenfassend ist folgendes festzustellen:

Die Erfindung betrifft ein Verstärkungselement für ein flexibles, folien- oder plattenartiges Werkstück 4, mit einem länglichen, stabförmigen Kern 2, welcher mit einem Klebermaterial 3 zur Befestigung an dem Werkstück 4 ummantelt ist.

## Patentansprüche

1. Verstärkungselement für ein flexibles, folien- oder plattenartiges Werkstück (4), mit einem länglichen, stabförmigen Kern (2), welcher mit einem Klebermaterial (3) zur Befestigung an dem Werkstück (4) ummantelt ist.

2. Verstärkungselement nach Anspruch 1, dadurch gekennzeichnet, daß das Klebermaterial (3) aus einem thermoplastischen Material besteht.

3. Verstärkungselement nach Anspruch 1 oder 2, dadurch gekennzeichnet, daß das Klebermaterial (3) zur Befestigung des Kerns (2) an dem Werkstück (4) ausgebildet und dimensioniert ist.

4. Verstärkungselement nach einem der Ansprüche 1 bis 3, dadurch gekennzeichnet, daß an dem Kern (2) zusätzliches Klebermaterial (3) angeordnet ist.

5. Verstärkungselement nach einem der Ansprüche 1 bis 4, dadurch gekennzeichnet, daß der Kern (2) im wesentlichen starr ausgebildet ist.

6. Verstärkungselement nach einem der Ansprüche 1 bis 4, dadurch gekennzeichnet, daß der Kern (2) flexibel ausgebildet ist.

7. Verstärkungselement nach Anspruch 6, dadurch gekennzeichnet, daß der Kern (2) fadenartig ausgebildet ist.

8. Verstärkungselement nach einem der Ansprüche 1 bis 7, dadurch gekennzeichnet, daß der Kern (2) zur Übertragung von Zugkräften ausgebildet ist.

9. Verstärkungselement nach einem der Ansprüche 1 bis 8, dadurch gekennzeichnet, daß der Kern (2) zur Übertragung von Druckkräften ausgebildet ist.

10. Verwendung eines Verstärkungselements nach einem der Ansprüche 1 bis 9 für einen Filter aus einem Material, welches Papier, ein filzartiges Material, einen porösen Kunststoff und/oder ein Faservlies umfaßt.
